(19) Europäisches Patentamt
European Patent Office
Office européen des brevets

(11) **EP 3 929 866 A2**

(12) **EUROPEAN PATENT APPLICATION**

(43) Date of publication:
**29.12.2021 Bulletin 2021/52**

(51) Int Cl.:
***G06T 5/00*** *(2006.01)*     ***G06T 11/00*** *(2006.01)*
***G06T 7/11*** *(2017.01)*

(21) Application number: **21206464.6**

(22) Date of filing: **04.11.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.01.2021 CN 202110089245**

(71) Applicant: **BEIJING BAIDU NETCOM SCIENCE
TECHNOLOGY CO., LTD.**
**No.10 Shangdi 10th Street**
**Haidian District**
**Beijing 100085 (CN)**

(72) Inventors:
• **Zou, Zhikang**
**Beijing, 100085 (CN)**
• **Ye, Xiaoqing**
**Beijing, 100085 (CN)**
• **Chen, Qu**
**Beijing, 100085 (CN)**
• **Sun, Hao**
**Beijing, 100085 (CN)**

(74) Representative: **Maiwald Patent- und
Rechtsanwaltsgesellschaft mbH**
**Elisenhof**
**Elisenstraße 3**
**80335 München (DE)**

(54) **INPAINTING METHOD AND APPARATUS FOR HUMAN IMAGE, AND ELECTRONIC DEVICE**

(57) The disclosure provides an inpainting method for a human image, an inpainting apparatus for a human image and an electronic device. An image to be processed is received (S101). The image to be processed contains a human image to be processed. A three-dimensional human body model corresponding to the human image to be processed, camera parameters, and human body posture information are generated (S102) based on the image to be processed. A segmentation image corresponding to the human image to be processed is generated (S103) based on the image to be processed. A processed human image corresponding to the human image to be processed is generated (S104) based on the three-dimensional human body model, the camera parameters, the human body posture information, and the segmentation image.

FIG. 1

Printed by Jouve, 75001 PARIS (FR)

EP 3 929 866 A2

**Description**

## TECHNICAL FIELD

The disclosure relates to a field of image processing technology, and more particularly to a field of artificial intelligence technologies such as deep learning and computer vision.

## BACKGROUND

In the related art, an inpainting method for a human image mainly relies on 2D (Two-Dimensional) inpainting technologies, human images in an image are detected and sent to an inpainting network by using the 2D inpainting technologies to obtain output images, that is, the images in which occluded portions of the image are complemented by the network.

However, inpainting results are all output by the neural network, which has no processing power for unseen human images, and the results only rely on semantic information of the images, instead of real human body structure. In this way, errors in the completion or even no completion, and the technical problem that the complemented human image does not conform to true distribution are inevitable. Therefore, how to ensure that the human body in the complemented human image conforms to the actual human body structure and improve accuracy and reliability of inpainting human image are of important research directions.

## SUMMARY

The embodiments of the disclosure provide an inpainting method for a human image, an inpainting apparatus for a human image and an electronic device.

Embodiments of the disclosure in a first aspect provide an inpainting method for a human image. The method includes: obtaining an image to be processed, in which the image to be processed contains a human image to be processed; generating a three-dimensional human body model corresponding to the human image to be processed, camera parameters, and human body posture information based on the image to be processed; generating a segmentation image corresponding to the human image to be processed based on the image to be processed; and generating a processed human image corresponding to the human image to be processed based on the three-dimensional human body model, the camera parameters, the human body posture information, and the segmentation image.

Embodiments of the disclosure in a second aspect provide an apparatus for a human image. The apparatus includes: an obtaining module, a first generating module, a second generating module and a third generating module.

The obtaining module is configured to obtain an image to be processed, wherein the image to be processed contains a human image to be processed.

The first generating module is configured to generate a three-dimensional human body model corresponding to the human image to be processed, camera parameters, and human body posture information based on the image to be processed.

The second generating module is configured to generate a segmentation image corresponding to the human image to be processed based on the image to be processed.

The third generating module is configured to generate a processed human image corresponding to the human image to be processed based on the three-dimensional human body model, the camera parameters, the human body posture information, and the segmentation image.

Embodiments of the disclosure in a third aspect provide an electronic device. The electronic device includes: at least one processor and a memory communicatively coupled to the at least one processor. The memory stores instructions executable by the at least one processor. When the instructions are implemented by the at least one processor, the at least one processor is caused to implement the method according to the first aspect of the disclosure.

Embodiments of the disclosure in a fourth aspect provide a non-transitory computer-readable storage medium storing computer instructions. The computer instructions are used to make the computer implement the method according to the first aspect of the disclosure.

Embodiments of the disclosure in a fifth aspect provide a computer program product including computer programs, and when the computer program is executed by a processor, the method according to the first aspect of the disclosure is implemented.

It is be understood that the content described in this section is not intended to identify key or important features of the embodiments of the disclosure, nor is it intended to limit the scope of the disclosure. Additional features of the disclosure will be easily understood based on the following description.

## BRIEF DESCRIPTION OF THE DRAWINGS

The drawings are used to better understand the solution and do not constitute a limitation to the disclosure, in which:

FIG. 1 is a schematic diagram illustrating an inpainting method for a human image according to embodiments of the disclosure.

FIG. 2 is a schematic diagram illustrating an image to be processed according to embodiments of the disclosure.

FIG. 3 is a schematic diagram illustrating an inpainting method for a human image according to embodiments of the disclosure.

FIG. 4 is a schematic diagram inpainting method for a human image according to embodiments of the disclosure.

FIG. 5 is a schematic diagram inpainting method for a human image according to embodiments of the disclosure.

FIG. 6 is a schematic diagram of inpainting method for a human image according to embodiments of the disclosure.

FIG. 7 is a schematic diagram inpainting method for a human image according to embodiments of the disclosure.

FIG. 8 is a schematic diagram illustrating another image to be processed according to embodiments of the disclosure.

FIG. 9 is a block diagram illustrating an inpainting apparatus for a human image used to implement an inpainting method for a human image according to embodiments of the disclosure.

FIG. 10 is a block diagram illustrating an inpainting apparatus for a human image used to implement an inpainting method for a human image according to embodiments of the disclosure.

FIG. 11 is a block diagram illustrating an electronic device used to implement an inpainting method for a human image or an inpainting apparatus for a human image according to embodiments of the disclosure.

## DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope and spirit of the disclosure. For clarity and conciseness, descriptions of well-known functions and structures are omitted in the following description.

The following briefly describes the technical fields involved in the solution of the disclosure.

Image processing is a technology that uses a computer to analyze images to achieve desired results, which also known as PhotoImpact. Image processing generally refers to digital image processing. Digital image refers to a large 2D array obtained by shooting with industrial cameras, video cameras, scanners, and other devices. The elements of the array are called pixels, and values of the pixels are called gray values. Image processing technology generally includes three parts, i.e., image compression, enhancement and restoration, and matching, description, and recognition.

AI (Artificial Intelligence) is a discipline that studies certain thinking processes and intelligent behaviors (such as learning, reasoning, thinking, and planning) that allow computers to simulate life, which has both hardware-level technology and software-level technology. AI hardware technology generally includes computer vision technology, speech recognition technology, natural language processing technology and its learning/deep learning, big data processing technology, knowledge graph technology and other aspects.

DL (Deep Learning) is a new research direction in the field of ML (Machine Learning). DL is introduced into ML to bring it closer to the original goal, i.e., artificial intelligence. DL is to learn internal laws and representation levels of sample data. Information obtained in the learning process is of great help to interpretation of data such as text, images, and sounds. The goal of DL is to enable machines to have the ability to analyze and learn like humans, and to recognize data such as text, images, and sounds. DL is a complex machine learning algorithm that has achieved results in speech and image recognition far surpassing the related art.

Computer vision is a science that studies how to make machines "see". Furthermore, computer vision refers to the use of cameras and computers instead of human eyes to identify, track, and measure machine vision for further graphics processing, so that an image that is more suitable for human eyes to observe or send to the instrument for inspection is obtained through computer processing. As a scientific discipline, computer vision studies related theories and technologies, to establish an artificial intelligence system that obtains "information" from images or multi-dimensional data. The information refers to information defined by Shannon that is used to help make a "decision". Since perception may be seen as extracting information from sensory signals, computer vision is seen as a science that studies how to make artificial systems "perceive" from images or multi-dimensional data.

AR (Augmented Reality) is a technology that ingeniously integrates virtual information with the real world, which uses a variety of technical means such as multimedia, three-dimensional modeling, real-time tracking and registration, intelligent interaction, and sensing. After the computer-generated text, image, three-dimensional model, music, video, and other virtual information are simulated and applied to the real world, and the two kinds of information complement each other, thus realizing "enhancement" of the real world.

The following describes an inpainting method for a human image, and an inpainting apparatus for a human image and electronic device according to embodiments of the disclosure with reference to the accompanying drawings.

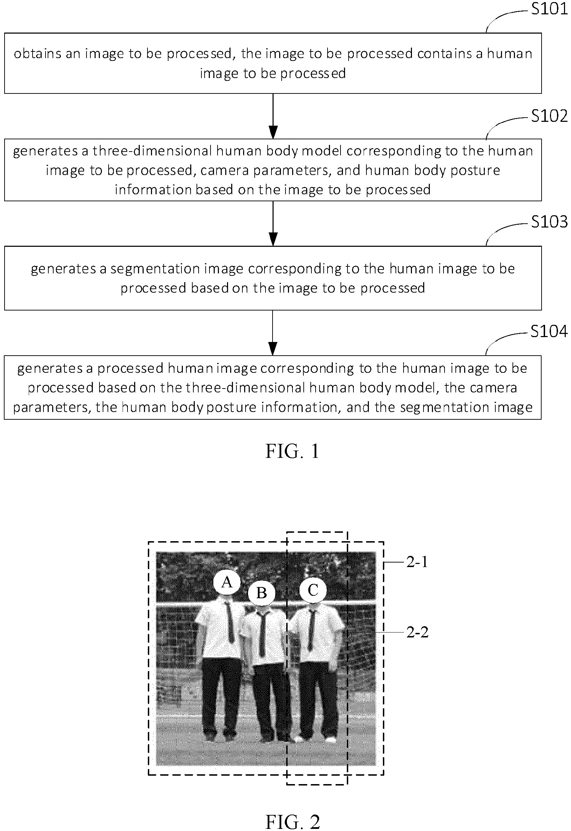

FIG. 1 is a schematic diagram illustrating an inpainting method for a human image according to embodiments of the disclosure. It is to be noted that an execution subject of the inpainting method for the human image in the embodiments of the disclosure is the inpainting apparatus for the human image. The inpainting apparatus for the human image may specifically be a hardware device, or software in a hardware device. The hardware devices may be terminal devices or servers. As illustrated in FIG. 1, the inpainting method for the human image includes the following.

In block S101, an image to be processed is obtained. The image to be processed contains a human image to be processed.

The image to be processed may be any image or any video, such as teaching videos and videos of film and television drama works. The video may be decoded and framed to obtain image frames, and any image frame is selected as the image to be processed.

In the image to be processed, a part of a human body is missing, and an image of this human body is called the human image to be processed.

It is to be noted that when trying to obtain the image to be processed, images pre-stored in the local or remote storage area may be obtained as the image to be processed, or an image can be directly captured as the image to be processed. Optionally, the stored video or image may be obtained from at least one of a local or a remote video library and image library to obtain the image to be processed. As an example, the image that is captured may also be directly taken as the image to be processed. Embodiments of the disclosure do not limit the way of obtaining the image to be processed, and the way can be selected based on an actual situation.

It is to be noted that the image to be processed includes a human image to be processed. For example, as illustrated in FIG. 2, the image to be processed 2-1 includes a human image 2-2 to be processed.

In block S102, a three-dimensional human body model corresponding to the human image to be processed, camera parameters, and human body posture information are generated based on the image to be processed.

It is to be noted that the disclosure does not limit the manner of generating the three-dimensional human body model corresponding to the human image to be processed, the camera parameters, and the human body posture information based on the image to be processed, and the manner can be selected according to the actual situation.

In a possible implementation, after obtaining the image to be processed, the image to be processed can be input into a pre-trained model to obtain the three-dimensional human body model corresponding to the human image to be processed, the camera parameters, and the human body posture information.

In the disclosure, the selection of the pre-trained model is not limited, which can be made according to an actual situation. For example, a skinned multi-person linear expression model (or called the SMPLX model) may be selected. The SMPLX model is a body parameterization model, which defines the three-dimensional (3D) human body model by parameterizing key points of the human body, body shape information, and camera positions.

In block S103, the segmentation image corresponding to the human image to be processed is generated based on the image to be processed.

In embodiments of the disclosure, after generating the 3D human body model corresponding to the human image to be processed, the camera parameters, and the human body posture information, the camera parameters and the human body posture information are projected onto an image to generate the segmentation image corresponding to the human image to be processed.

In block S104, a processed human image corresponding to the human image to be processed is generated based on the three-dimensional human body model, the camera parameters, the human body posture information, and the segmentation image.

The processed human image refers to an image obtained by reconstructing the missing part of the human body. That is, the processed human image includes the reconstructed missing part.

It is to be noted that the disclosure does not limit the method of generating the processed human image corresponding to the human image to be processed based on the 3D human body model, the camera parameters, the human body posture information, and the segmentation image, and the method can be selected according to an actual condition.

In a possible implementation, the 3D human body model can be projected to the human image to be processed based on the camera parameters and the human body posture information to generate the processed human image corresponding to the human image to be processed.

According to the inpainting method for the human image of the embodiments of the disclosure, the image to be processed is obtained, and the 3D human body model, the camera parameters, and the human body posture information corresponding to the human image to be processed are generated based on the image to be processed. The segmentation image corresponding to the human image to be processed is generated based on the image to be processed. The processed human image corresponding to the human image to be processed is generated based on the 3D human body model, the camera parameters, the human body posture information, and the segmentation image. Therefore, inpainting of the human image is realized, such that the human body in the complemented human image is more in line with actual human body structure and occluded part of the human body in the image to be processed is complemented, thereby ensuring the accuracy and reliability of inpainting the human image.

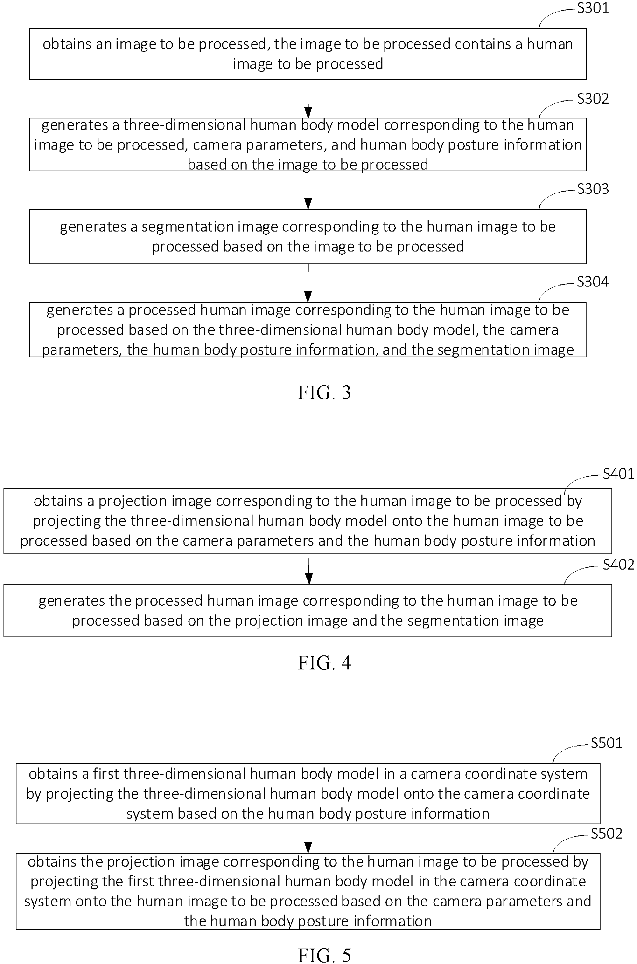

FIG. 3 is a schematic diagram illustrating an inpainting method for a human image according to embodiments of the disclosure. In a possible implementation, as illustrated in FIG. 3, based on the above embodiments, the inpainting method for the human image of the disclosure further includes the following.

In block S301, an image to be processed is obtained. The image to be processed contains a human image to be processed.

The block S301 is the same as the block S101, which is not repeated here.

In block S302, a three-dimensional human body model corresponding to the human image to be processed, camera parameters, and human body posture information are generated based on the image to be processed.

In an embodiment, the 3D human body model corresponding to the human image to be processed, the camera parameters, and the human body posture information are generated by inputting the image to be processed into a human body parameterization model.

The human body parametrization model is a skinned multi-person linear expression model.

Processes in the above block S103 includes blocks S203 to S205.

In block S303, the segmentation image corresponding to the human image to be processed is generated based on the image to be processed.

The segmentation image corresponding to the human image to be processed is generated by inputting the image to be processed into an instance segmentation network model.

In block S304, a processed human image corresponding to the human image to be processed is generated based on the three-dimensional human body model, the camera parameters, the human body posture information, and the segmentation image.

In a possible implementation, as illustrated in FIG. 4, based on the above embodiments, generating the processed human image corresponding to the human image to be processed based on the 3D human body model, the camera parameters, the human body posture information, and the segmented image in block S304 includes the following.

In block S401, a projection image corresponding to the human image to be processed is obtained by projecting the three-dimensional human body model onto the human image to be processed based on the camera parameters and the human body posture information.

In a possible implementation, as illustrated in FIG. 5, based on the above embodiments, obtaining the projection image corresponding to the human image to be processed by projecting the 3D human body model onto the human image to be processed based on the camera parameters and the human body posture information in S401 includes the following.

In block S501, a first three-dimensional human body model in a camera coordinate system is obtained by projecting the three-dimensional human body model onto the camera coordinate system based on the human body posture information.

Optionally, after the 3D human body model is generated, the 3D human body model is projected onto the camera coordinate system to obtain the first 3D human body model $P_o$ in the camera coordinate system:

$$P_o = RP_m + T = \begin{bmatrix} r11 & r12 & r13 \\ r21 & r22 & r23 \\ r31 & r32 & r33 \end{bmatrix} \begin{bmatrix} x_m \\ y_m \\ z_m \end{bmatrix} + \begin{bmatrix} t_x \\ t_y \\ t_z \end{bmatrix},$$

where, $P_o$ is the first 3D human body model in the camera coordinate system, R and T are human body posture information, and $P_m$ is the 3D human body model before the projection.

In block S502, the projection image corresponding to the human image to be processed is obtained by projecting the first three-dimensional human body model in the camera coordinate system onto the human image to be processed based on the camera parameters and the human body posture information.

Optionally, after obtaining the first 3D human body model in the camera coordinate system, the first 3D human body model in the camera coordinate system is projected on the human image to be processed based on the camera parameters and the human body posture information to obtain the projection image Ip corresponding to the human image to be processed:

$$\frac{1}{Zm}\begin{bmatrix} u \\ v \\ 1 \end{bmatrix} = K \begin{bmatrix} R & T \\ 0 & 1 \end{bmatrix} \mathsf{P^o},$$

where, K is the camera parameter.

In block S402, the processed human image corresponding to the human image to be processed is generated based on the projection image and the segmentation image.

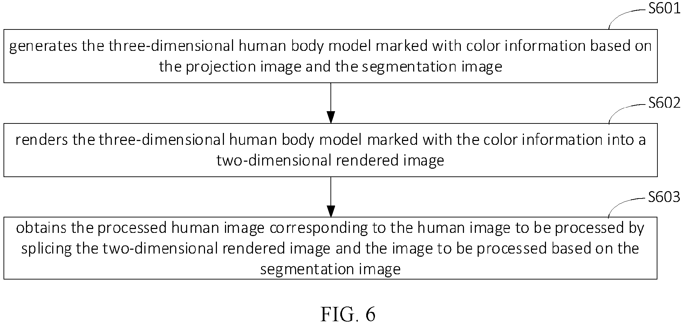

In a possible implementation, as illustrated in FIG. 6, based on the above embodiments, generating the processed human image corresponding to the human image to be processed based on the projection image and the segmentation image in S402 includes the following.

In block S601, the three-dimensional human body model marked with color information is generated based on the projection image and the segmentation image.

It is to be noted that the projected point forming the projection image may be in the segmentation image or not in the segmentation image. The following respectively explains the case in which the projected point is in the segmentation image and the case where the projected point is not in the segmentation image.

For example, a range corresponding to the segmentation image in the projection image is determined by aligning the projection image and segmentation image based on feature points of the human body. When a projected point forming the projection image is within the range corresponding to the segmentation image, i.e., when the projected point is in the segmentation image, in a possible implementation, the color information of vertexes contained in the 3D human body model and corresponding to the projected points is marked with the color information of the image to be processed at positions of projected points.

When a projected point forming the projection image is not within the range corresponding to the segmentation image, i.e., when the projected point is not in the segmentation image, in a possible implementation, symmetry points in the human body parameterization model corresponding to the projected points are obtained, and the color information of the vertexes contained in the 3D human body model corresponding to the projected points is marked with the color information at positions of the image to be processed corresponding to the symmetry points.

In block S602, the three-dimensional human body model marked with the color information is rendered into a two-dimensional rendered image.

It is to be noted that, in the disclosure, the method for rendering the 3D human body model marked with the color information into a 2D rendered image is not limited, and the method may be selected according to an actual condition. Optionally, the rendering may be performed based on a Python Render (Pyrender for short) library to obtain the 2D rendered image. Optionally, the rendering may be performed based on an OpenGL library to obtain the 2D rendered image.

In block S603, the processed human image corresponding to the human image to be processed is obtained by splicing the two-dimensional rendered image and the image to be processed based on the segmentation image.

In embodiments of the disclosure, the points corresponding to the points in the segmentation image in the image to be processed is spliced with the points in the 2D rendered image that do not correspond to the points in the segmentation image to obtain the processed human image corresponding to the human image to be processed.

For example, a range of the segmentation image on the image to be processed is determined by aligning the segmentation image and the image to be processed based on feature points. A range of the segmentation image on the two-dimensional rendered image is determined by aligning the segmentation image and the two-dimensional rendered image based on feature points. First points of the image to be processed and second points of the two-dimensional rendered image are spliced. The first points are within the range of the segmentation range, and the second points are outside the range of the segmentation range.

With the inpainting method for the human image according to the embodiments of the disclosure, the problem that the human image in the image to be processed is occluded is effectively solved based on the image segmentation technology and the 3D human body model, and the occluded portion may be more accurately inpainted to achieve the inpainting of the human image, so that the human body in the processed human image is more in line with the actual human body structure, the occluded portion of the human body in the image to be processed is filled up, and the accuracy and reliability of inpainting the human image are further improved.

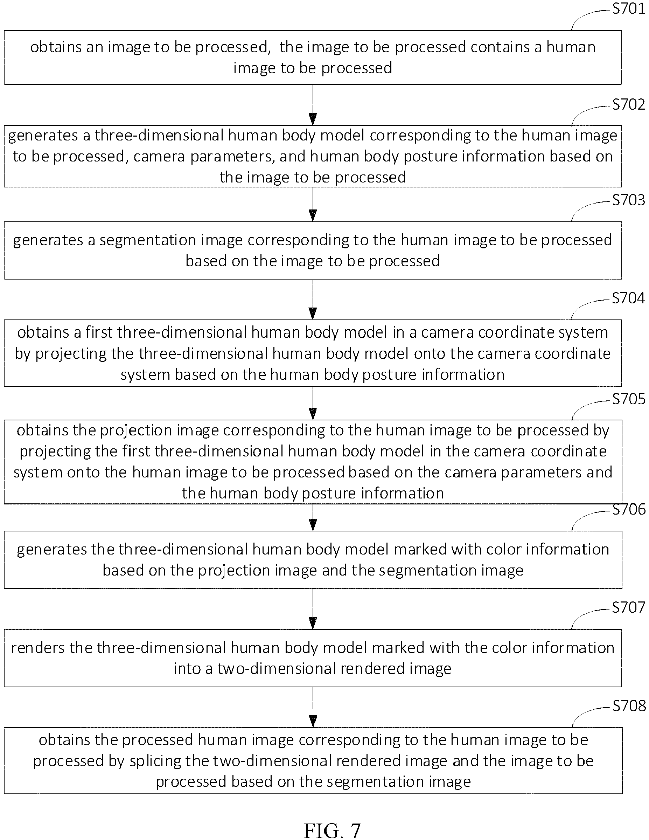

FIG. 7 is a schematic diagram illustrating an inpainting method for a human image according to embodiments of the disclosure. In a possible implementation, as illustrated in FIG. 7, based on the above embodiments, the inpainting method for the human image includes the following.

In block S701, an image to be processed is obtained. The image to be processed contains a human image to be processed.

In block S702, a three-dimensional human body model corresponding to the human image to be processed, camera parameters, and human body posture information are generated based on the image to be processed.

In block S703, a segmentation image corresponding to the human image to be processed is generated based on the image to be processed.

In block S704, a first three-dimensional human body model in a camera coordinate system is obtained by projecting the three-dimensional human body model onto the camera coordinate system based on the human body posture information.

In block S705, the projection image corresponding to the human image to be processed is obtained by projecting the first three-dimensional human body model in the camera coordinate system onto the human image to be processed based on the camera parameters and the human body posture information.

In block S706, the three-dimensional human body model marked with color information is generated based on the projection image and the segmentation image.

In block S707, the three-dimensional human body model marked with the color information is rendered into a two-dimensional rendered image.

In block S708, the processed human image corresponding to the human image to be processed is obtained by splicing the two-dimensional rendered image and the image to be processed based on the segmentation image.

It is to be noted that, for the introduction of steps S701 to S708, reference may be made to the relevant records in the above-mentioned embodiments, which will not be repeated here.

It is to be noted that the inpainting method for a human image in the disclosure is applied to a variety of scenes.

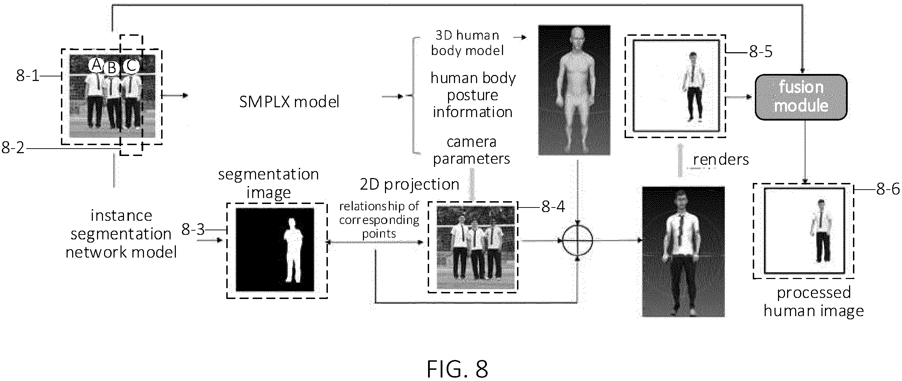

For inpainting application scenarios based on AR technology, as illustrated in FIG. 8, the image to be processed 8-1 includes the human image to be processed 8-2 corresponding to a certain user. Optionally, based on the DL, the computer vision and other AL technologies, the human image to be processed 8-1 may be input into the SMPLX model to generate the 3D human body model corresponding to the human image to be processed, the camera parameters, and the human body posture information. Further, the human image to be processed 8-1 may be input into the instance segmentation network model to generate the segmentation image 8-3 corresponding to the human image to be processed.

In this case, the 3D human body model, the camera parameters, the human body posture information, and the segmentation image are obtained. Further, the 3D human body model is projected onto the human image to be processed based on the camera parameters and the human body posture information to obtain the projection image 8-4 corresponding to the human image to be processed. The 3D human body model marked with the color information is generated based on the projection image and the segmentation image, and the 3D human body model marked with the color information is rendered into a 2D rendering image 8-5. The 2D rendering image is spliced with the image to be processed based on the segmentation image. For points existing in the segmentation image, the image to be processed is obtained, and for points not existing in the segmentation image, the 2D rendering image is used to obtain the processed human image 8-6 corresponding to the human image to be processed.

With the inpainting method for the human image of the embodiments of the disclosure, based on the image segmentation technology and the 3D human body model, the problem that the human image in the image to be processed is occluded is effectively solved, and the occluded portion may be more accurately filled up to achieve inpainting of the human image, so that the human body in the processed human image is more in line with the actual human body structure, the occluded portion of the human body in the image to be processed is filled up, and the accuracy and reliability of inpainting the human image are further improved.

Corresponding to the inpainting method for the human image according to the embodiments, the embodiments of the disclosure also provide the inpainting apparatus for the human image. The inpainting apparatus for the human image provided in the embodiments corresponds to the inpainting method for the human image. Therefore, the inpainting method for the human image is also applicable to the inpainting apparatus for the human image in the embodiments, which will not be described in detail in this embodiment.

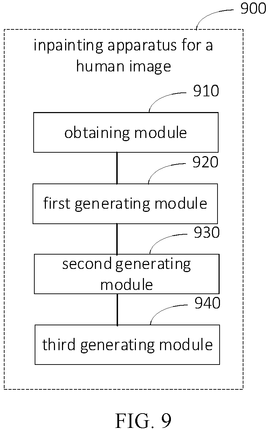

FIG. 9 is a schematic diagram of an inpainting apparatus for a human image according to embodiments of the disclosure.

As illustrated in FIG. 9, the inpainting apparatus for a human image 900 includes: an obtaining module 910, a first generating module 920, a second generating module 930 and a third generating module 940.

The obtaining module 910 is configured to obtain an image to be processed, the image to be processed contains a human image to be processed.

The first generating module 920 is configured to generate a three-dimensional human body model corresponding to the human image to be processed, camera parameters, and human body posture information based on the image to be processed.

The second generating module 930 is configured to generate a segmentation image corresponding to the human image to be processed based on the image to be processed.

The third generating module 940 is configured to generate a processed human image corresponding to the human image to be processed based on the three-dimensional human body model, the camera parameters, the human body posture information, and the segmentation image.

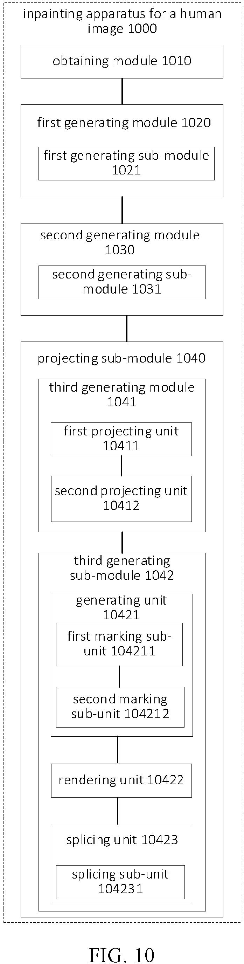

FIG. 10 is a schematic diagram of an inpainting apparatus for a human image according to embodiments of the disclosure.

As illustrated in FIG. 10, the inpainting apparatus for a human image 1000 includes: an obtaining module 1010, a first generating module 1020, a second generating module 1030 and a third generating module 1040.

The first generating module 1020 includes: a first generating sub-module 1021, configured to generate the three-dimensional human body model corresponding to the human image to be processed, the camera parameters, and the human body posture information by inputting the image to be processed into a human body parameterization model.

The human body parametrization model is a skinned multi-person linear expression model.

The second generating module 1030 includes: a second generating sub-module 1031, configured to generate the segmentation image by inputting the image to be processed into an instance segmentation network model.

The third generating module 1040 includes: a projecting sub-module 1041 and a third generating sub-module 1042.

The projecting sub-module 1041 is configured to obtain a projection image corresponding to the human image to be processed by projecting the three-dimensional human body model onto the human image to be processed based on the camera parameters and the human body posture information.

The third generating sub-module 1042 is configured to generate the processed human image corresponding to the human image to be processed based on the projection image and the segmentation image.

The projecting sub-module 1041 includes: a first projecting unit 10411 and a second projecting unit 10412.

The first projecting unit 10411 is configured to obtain a first three-dimensional human body model in a camera coordinate system by projecting the three-dimensional human body model onto the camera coordinate system based on the human body posture information.

The second projecting unit 10412 is configured to obtain the projection image corresponding to the human image to be processed by projecting the first three-dimensional human body model in the camera coordinate system onto the human image to be processed based on the camera parameters and the human body posture information.

The third generating submodule 1042 includes: a generating unit 10421, a rendering unit 10422 and a splicing unit 10423.

The generating unit 10421 is configured to generate the three-dimensional human body model marked with color information based on the projection image and the segmentation image. The rendering unit 10422 is configured to render the three-dimensional human body model marked with the color information into a two-dimensional rendered image. The splicing unit 10423 is configured to obtain the processed human image corresponding to the human image to be processed by splicing the two-dimensional rendered image and the image to be processed based on the segmentation image.

The generating unit 10421 includes: a first marking sub-unit 104211 and a second marking sub-unit 104212. The first marking sub-unit 104211 is configured to, when a projected point forming the projection image is within the segmentation image, mark the color information of a vertex contained in the three-dimensional human body model and corresponding to the projected point with the color information of the image to be processed at a position corresponding to the projected point. The second marking sub-unit 104212 is configured to, when a projected point forming the projected image is not within the segmentation image, obtain a symmetric point of the projected point from the human body parameterization model, and mark the color information of a vertex contained in the three-dimensional human body model and corresponding to the projected point with the color information of the image to be processed at a position corresponding to the symmetric point.

The splicing unit 10423 includes: a splicing sub-unit 104231, configured to obtain the processed human image by splicing points contained in the image to be processed and corresponding to the segmentation image with points contained in the two-dimensional rendered image and not corresponding to the segmentation image.

It should be noted that the obtaining module 1010 and the obtaining module 910 have the same function and structure.

According to an inpainting method for a human image according to the embodiments of the disclosure, the image to be processed is obtained, the three-dimensional human body model corresponding to the human image to be processed, camera parameters, and human body posture information are generated based on the image to be processed. The segmentation image corresponding to the human image to be processed is generated based on the image to be processed. The processed human image corresponding to the human image to be processed is generated based on the three-dimensional human body model, the camera parameters, the human body posture information, and the segmentation image. Therefore, inpainting of the human image is realized, the human body in the complemented human image is more in line with actual human body structure, occluded part of the human body in the image to be processed is complemented, thereby ensuring accuracy and reliability of inpainting the human image.

According to the embodiments of the disclosure, the disclosure also provides an electronic device, a readable storage medium and a computer program product.

FIG. 11 is a block diagram of an electronic device 700 configured to implement the method according to embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 11, the device 1100 includes a computing unit 1101 performing various appropriate actions and processes based on computer programs stored in a read-only memory (ROM) 1102 or computer programs loaded from the storage unit 1108 to a random-access memory (RAM) 1103. In the RAM 1103, various programs and data required for the operation of the device 1100 are stored. The computing unit 1101, the ROM 1102, and the RAM 1103 are connected to each other through a bus 1104. An input/output (I/O) interface 1105 is also connected to the bus 1104.

Components in the device 1100 are connected to the I/O interface 1105, including: an inputting unit 1106, such as a keyboard, a mouse; an outputting unit 1107, such as various types of displays, speakers; a storage unit 1108, such as a disk, an optical disk; and a communication unit 1109, such as network cards, modems, wireless communication transceivers, and the like. The communication unit 1109 allows the device 1100 to exchange information/data with other devices through a computer network such as the Internet and/or various telecommunication networks.

The computing unit 1101 may be various general-purpose and/or dedicated processing components with processing and computing capabilities. Some examples of computing unit 1101 include, but are not limited to, a central processing unit (CPU), a graphics processing unit (GPU), various dedicated artificial intelligence (AI) computing chips, various computing units that run machine learning model algorithms, and a digital signal processor (DSP), and any appropriate processor, controller, and microcontroller. The computing unit 1101 executes the various methods and processes described above. For example, in some embodiments, the method may be implemented as a computer software program, which is tangibly contained in a machine-readable medium, such as the storage unit 1108. In some embodiments, part or all of the computer program may be loaded and/or installed on the device 1100 via the ROM 1102 and/or the communication unit 1109. When the computer program is loaded on the RAM 1103 and executed by the computing unit 1101, one or more steps of the method described above may be executed. Alternatively, in other embodiments, the computing unit 1101 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (egg, a communication network). Examples of communication networks include: local area network (LAN), wide area network (WAN), the Internet and Block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in the cloud computing service system, to solve defects such as difficult management and weak business scalability in the traditional physical host and Virtual Private Server (VPS) service. The server may also be a server of a distributed system, or a server combined with a block-chain.

It is to be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors. Any modification, equivalent replacement and improvement made within the spirit and principle of the disclosure shall be included in the protection scope of the disclosure.

**Claims**

1. An inpainting method for a human image, comprising:

   obtaining (S101; S301; S701) an image to be processed, wherein the image to be processed contains a human image to be processed;
   generating (S 102; S302; S702) a three-dimensional human body model corresponding to the human image to be processed, camera parameters, and human body posture information based on the image to be processed;
   generating (S103; S303; S703) a segmentation image corresponding to the human image to be processed based on the image to be processed; and
   generating (SI04; S304) a processed human image corresponding to the human image to be processed based on the three-dimensional human body model, the camera parameters, the human body posture information, and the segmentation image.

2. The method of claim 1, wherein generating (S102; S302; S702) the three-dimensional human body model corresponding to the human image to be processed, the camera parameters, and the human body posture information based on the image to be processed comprises:
   generating the three-dimensional human body model corresponding to the human image to be processed, the camera parameters, and the human body posture information by inputting the image to be processed into a human body parameterization model.

3. The method of claim 2, wherein the human body parametrization model is a skinned multi-person linear expression model.

4. The method of any one of claims 1 to 3, wherein generating (S103; S303; S703) the segmentation image corresponding to the human image to be processed based on the image to be processed comprises:
generating the segmentation image by inputting the image to be processed into an instance segmentation network model.

5. The method of any one of claims 1 to 4, wherein generating (S104; S304) the processed human image corresponding to the human image to be processed based on the three-dimensional human body model, the camera parameters, the human body posture information, and the segmented image, comprises:

   obtaining (S401) a projection image corresponding to the human image to be processed by projecting the three-dimensional human body model onto the human image to be processed based on the camera parameters and the human body posture information; and
   generating (S402) the processed human image corresponding to the human image to be processed based on the projection image and the segmentation image.

6. The method of claim 5, wherein obtaining (S401) the projection image comprises:

   obtaining (S501; S704) a first three-dimensional human body model in a camera coordinate system by projecting the three-dimensional human body model onto the camera coordinate system based on the human body posture information; and
   obtaining (S502; S705) the projection image corresponding to the human image to be processed by projecting the first three-dimensional human body model in the camera coordinate system onto the human image to be processed based on the camera parameters and the human body posture information.

7. The method of claim 5 or 6, wherein generating (S402) the processed human image corresponding to the human image to be processed based on the projection image and the segmentation image, comprises:

   generating (S601; S706) the three-dimensional human body model marked with color information based on the projection image and the segmentation image;
   rendering (S602; S707) the three-dimensional human body model marked with the color information into a two-dimensional rendered image; and
   obtaining (S603; S708) the processed human image corresponding to the human image to be processed by splicing the two-dimensional rendered image and the image to be processed based on the segmentation image.

8. The method of claim 7, wherein generating (S601) the three-dimensional human body model marked with the color information based on the projection image and the segmentation image comprises:

   when a projected point forming the projection image is within the segmentation image, marking the color information of a vertex contained in the three-dimensional human body model and corresponding to the projected point with the color information of the image to be processed at a position corresponding to the projected point; and
   when a projected point forming the projected image is not within the segmentation image, obtaining a symmetric point of the projected point from the human body parameterization model, and marking the color information of a vertex contained in the three-dimensional human body model and corresponding to the projected point with the color information of the image to be processed at a position corresponding to the symmetric point.

9. The method of claim 7 or 8, wherein obtaining (S603; S708) the processed human image corresponding to the human image to be processed by splicing the two-dimensional rendered image and the image to be processed based on the segmentation image comprises:
obtaining the processed human image by splicing points contained in the image to be processed and corresponding to the segmentation image with points contained in the two-dimensional rendered image and not corresponding to the segmentation image.

10. An inpainting apparatus (900; 1000) for a human image, comprising:

    an obtaining module (910; 1010), configured to obtain an image to be processed, wherein the image to be processed contains a human image to be processed;
    a first generating module (920; 1020), configured to generate a three-dimensional human body model corresponding to the human image to be processed, camera parameters, and human body posture information based on the image to be processed;

a second generating module (930; 1030), configured to generate a segmentation image corresponding to the human image to be processed based on the image to be processed; and

a third generating module (940; 1040), configured to generate a processed human image corresponding to the human image to be processed based on the three-dimensional human body model, the camera parameters, the human body posture information, and the segmentation image.

11. The apparatus (900; 1000) of claim 10, wherein the first generating module (920; 1020) comprises:

a first generating sub-module (1021), configured to generate the three-dimensional human body model corresponding to the human image to be processed, the camera parameters, and the human body posture information by inputting the image to be processed into a human body parameterization model.

12. The apparatus (400; 1000) of claim 11, wherein the human body parametrization model is a skinned multi-person linear expression model.

13. An electronic device (1100) comprising a processor and a memory storing executable program codes, wherein the processor runs a program corresponding to the executable program code by reading the executable program codes stored in the memory, to implement the inpainting method for a human image according to any one of claims 1 to 9.

14. A computer-readable storage medium with a computer program stored thereon, wherein the program is executed by a processor to implement an inpainting method for a human image according to any one of claims 1 to 9.

15. A computer program product, wherein when an instruction stored in the computer program product is executed by a processor, an inpainting method for a human image according to any one of claims 1 to 9 is implemented.

S101

obtains an image to be processed, the image to be processed contains a human image to be processed

S102

generates a three-dimensional human body model corresponding to the human image to be processed, camera parameters, and human body posture information based on the image to be processed

S103

generates a segmentation image corresponding to the human image to be processed based on the image to be processed

S104

generates a processed human image corresponding to the human image to be processed based on the three-dimensional human body model, the camera parameters, the human body posture information, and the segmentation image

FIG. 1

FIG. 2

S301

obtains an image to be processed, the image to be processed contains a human image to be processed

S302

generates a three-dimensional human body model corresponding to the human image to be processed, camera parameters, and human body posture information based on the image to be processed

S303

generates a segmentation image corresponding to the human image to be processed based on the image to be processed

S304

generates a processed human image corresponding to the human image to be processed based on the three-dimensional human body model, the camera parameters, the human body posture information, and the segmentation image

FIG. 3

S401

obtains a projection image corresponding to the human image to be processed by projecting the three-dimensional human body model onto the human image to be processed based on the camera parameters and the human body posture information

S402

generates the processed human image corresponding to the human image to be processed based on the projection image and the segmentation image

FIG. 4

S501

obtains a first three-dimensional human body model in a camera coordinate system by projecting the three-dimensional human body model onto the camera coordinate system based on the human body posture information

S502

obtains the projection image corresponding to the human image to be processed by projecting the first three-dimensional human body model in the camera coordinate system onto the human image to be processed based on the camera parameters and the human body posture information

FIG. 5

S601

| generates the three-dimensional human body model marked with color information based on the projection image and the segmentation image |

S602

| renders the three-dimensional human body model marked with the color information into a two-dimensional rendered image |

S603

| obtains the processed human image corresponding to the human image to be processed by splicing the two-dimensional rendered image and the image to be processed based on the segmentation image |

FIG. 6

S701

obtains an image to be processed, the image to be processed contains a human image to be processed

S702

generates a three-dimensional human body model corresponding to the human image to be processed, camera parameters, and human body posture information based on the image to be processed

S703

generates a segmentation image corresponding to the human image to be processed based on the image to be processed

S704

obtains a first three-dimensional human body model in a camera coordinate system by projecting the three-dimensional human body model onto the camera coordinate system based on the human body posture information

S705

obtains the projection image corresponding to the human image to be processed by projecting the first three-dimensional human body model in the camera coordinate system onto the human image to be processed based on the camera parameters and the human body posture information

S706

generates the three-dimensional human body model marked with color information based on the projection image and the segmentation image

S707

renders the three-dimensional human body model marked with the color information into a two-dimensional rendered image

S708

obtains the processed human image corresponding to the human image to be processed by splicing the two-dimensional rendered image and the image to be processed based on the segmentation image

FIG. 7

FIG. 8

900

inpainting apparatus for a
human image

910

obtaining module

920

first generating module

930

second generating
module

940

third generating module

FIG. 9

inpainting apparatus for a human image 1000

obtaining module 1010

first generating module 1020

first generating sub-module 1021

second generating module 1030

second generating sub-module 1031

projecting sub-module 1040

third generating module 1041

first projecting unit 10411

second projecting unit 10412

third generating sub-module 1042

generating unit 10421

first marking sub-unit 104211

second marking sub-unit 104212

rendering unit 10422

splicing unit 10423

splicing sub-unit 104231

FIG. 10